# EUROPÄISCHE PATENTSCHRIFT

(11) **EP 0 546 267 B1**
(45) Veröffentlichungstag und Bekanntmachung des Hinweises auf die Patenterteilung: **23.08.1995**
(21) Anmeldenummer: 92116600.5
(22) Anmeldetag: 29.09.1992
(51) Int. Cl.: H02G 15/113, H02G 15/10

(54) **Spannverschluss zum Verschliessen einer Kabelmuffe für das Verbinden und Abzweigen von Kabeln, insbesondere Fernmeldekabeln**
Toggle-type fastener for closing a cable sleeve for jointing and branching cables, particularly telecommunications cables
Fermeture à genouillère pour la fermeture de manchons de câbles pour la jonction et la dérivation de câbles, en particulier de câbles de télécommunication

(30) Priorität: 12.12.1991 DE 4140977
(43) Veröffentlichungstag der Anmeldung: 16.06.1993
(73) Patentinhaber: Stewing Kunststoffbetrieb GmbH Dorsten, 46282 Dorsten (DE)
(72) Erfinder: Dehling, Helmut, Dipl.-Ing., W-4270 Dorsten 11 (DE)
(74) Vertreter: Honke, Manfred, Dr.-Ing.

(56) Entgegenhaltungen:
- DE-A- 3 512 165
- DE-U- 8 914 665
- US-A- 4 902 855

## Beschreibung

Die Erfindung betrifft einen Spannverschluß zum Verschließen einer Kabelmuffe für das Verbinden und Abzweigen von Kabeln, insbesondere Fernmeldekabeln, mit einem längsgeteilten Muffenrohr und die Längsteilung begrenzenden Verschlußprofilen mit jeweils einer Hinterschneidung, bestehend aus einer Spannschale und einem Spannbügel, wobei die Spannschale an ihrer einen Längsseite eine Klaue zum Hintergreifen des einen Verschlußprofils aufweist und an ihrer anderen Längsseite der Spannbügel schwenkbar gelagert ist und in eingeschwenktem Zustand eine Klaue zum Hintergreifen des anderen Verschlußprofils bildet, und wobei nach über einen Totpunkt hinaus eingeschwenktem Spannbügel die Längsränder des Muffenrohres zusammengedrückt sind.

Aus der DE-U-89 14 665 ist ein derartiger Spannverschluß bekannt, der schnell und einfach montiert werden kann und einen einwandfreien Verschluß des längsgeteilten Muffenrohres gewährleistet. Die bekannte Ausführungsform besteht aus Stahlblech. Der Spannbügel ist mittels eines Scharniers an der Spannschale schwenkbar gelagert. Dazu weist die Spannschale an ihre der Klaue abgewandten Längsseite einen Scharnierbolzen und Schwenkausnehmungen für den unter Bildung des Scharniers schwenkbar angeschlossenen Spannbügel auf. - Diese Ausführungsform hat sich an sich bewährt, ist jedoch weiter entwicklungsfähig.

Der Erfindung liegt die Aufgabe zugrunde, einen Spannverschluß der eingangs beschriebenen Ausführungsform zu schaffen, der sich durch eine in fertigungstechnischer und gewichtsmäßiger Hinsicht vereinfachte und funktionsgerechte Bauweise auszeichnet.

Diese Aufgabe löst die Erfindung bei einem gattungsgemäßen Spannverschluß dadurch, daß die Spannschale und der Spannbügel als rippenverstärkte Kunststoffteile ausgebildet sind, daß die Spannschale an ihrer der Klaue gegenüberliegenden Längsseite Lagerzapfen und der Spannbügel im Abstand der Lagerzapfer Lageraugen zur Aufnahme der Lagerzapfen aufweist, und daß die Lageraugen und die Lagerzapfen eine Rastsitzverbindung bilden. - Die Maßnahmen der Erfindung haben zur Folge, daß ein Spannverschluß aus Kunststoff verwirklicht wird, bei dem sich seinerseits Spannschale und Spannbügel in einfacher Weise fertigen und andererseits unschwer unter Bildung des Spannverschlusses zusammensetzen lassen, weil der Spannbügel unter Scharnierbildung auf die Spannschale aufgerastet werden kann, nämlich im Bereich der Lagerzapfen und Lageraugen. Überraschenderweise ist ein derartiger Spannverschluß aus Kunststoff dennoch zur Aufnahme der im Einsatz auftretenden Druck- und Zugbeanspruchungen geeignet. Darüber hinaus wird im Gegensatz zu der Ausführungsform aus Stahlblech eine erhebliche Gewichtsreduzierung erreicht. Als Werkstoff findet bevorzugt Durethan Verwendung.

Weitere erfindungswesentliche Merkmale sind im folgenden aufgeführt. So sieht die Erfindung vor, daß die Spannschale einen mäanderförmigen Längsquerschnitt unter wechselweiser Bildung von Zugabschnitten und Druckabschnitten mit einer gemeinsamen durchlaufenden Klaue aufweist, wobei die innenliegenden Zugabschnitte nach außen gerichtete Versteifungsrippen und die außenliegenden Druckabschnitte nach innen gerichtete Versteifungsrippen aufweisen. Durch diese Maßnahmen wird in festigkeitsmäßiger Hinsicht eine besonders hohe Stabilität erreicht, und zwar unter Vermeidung eines sonst üblichen Kastenprofils. Ein solches Kastenprofil ist in fertigungstechnischer Hinsicht verhältnismäßig kompliziert, während die mäanderförmige Ausbildung der Spannschale und im übrigen auch des Spannbügels keine fertigungstechnischen Schwierigkeiten bereitet. Das gilt insbesondere für den Entformungsvorgang. Vorzugsweise sind die Druckabschnitte schmaler als die Zugabschnitte ausgebildet und verlaufen die Versteifungsrippen in Längsrichtung. Durch die schmalere Ausbildung der Druckabschnitte können diese höhere spezifische Druckspannungen - nämlich höhere Druckspannungen pro Materialquerschnitt - aufnehmen. Der mittlere Bereich der Spannschale kann dagegen als verhältnismäßig breiter Zugabschnitt ausgebildet sein, während die beiden Randbereiche einen verhältnismäßig häufigen Wechsel von weniger breiten Druck- und Zugabschnitten aufweisen. Tatsächlich treten in den Randbereichen besonders hohe Beanspruchungen auf, weil sich dort die im Bereich der Verschlußprofile verlegte Längsdichtung mit jenen Umfangsdichtungen kreuzt, welche zwischen dem Muffenrohr und stirnseitigen Dichtungskörpern der Kabelmuffe angeordnet sind. Diese sich kreuzenden Längs- und Umfangsdichtungen verlangen hohe Spannkräfte, um eine einwandfreie Dichtwirkung zu erreichen.

Weiter sieht die Erfindung vor, daß die Zugabschnitte auf ihrer der Klaue gegenüberliegenden Längsseite über die Druckabschnitte vorkragende, die Längsseitige definierende Ausformungen mit beidseitig angeformten, gleichsam fliegend gelagerten Lagerzapfen aufweisen. Der Spannbügel weist erfindungsgemäß quer zur Längsrichtung angeordnete Versteifungsrippen mit obenseitig offenen Lageraugen und die Lageraugen definierenden Rastschultern auf, so daß unschwer ein Aufrasten auf die Lagerzapfen unter Bildung einer scharnierartigen Rastverbindung möglich ist. - Auch der Spannbügel weist vorzugsweise einen mäanderförmigen Längsquerschnitt unter Bildung von wechselweisen Zugabschnitten und Druckabschnitten auf, wobei die quer zur Längsrichtung angeordneten Versteifungsrippen den Übergang von den innenliegenden Zugabschnitten zu den außenliegenden Druckabschnitten bilden. Zweckmäßigerweise bilden zwei im Randbereich des Spannbügels liegende achssymmetrische Druckabschnitte Einstecköffnungen für Betätigungswerkzeuge, um die Hebelwirkung für den Spannvorgang bzw. Lösungsvorgang erheblich zu vergrößern. Außerdem kann der Spannbügel zumindest im mittleren Bereich eine Durchbrechung zum Anschluß eines Sicherungsmittels, vorzugsweise flexiblen Sicherungsmittels aufweisen, welches im übrigen an einem Haltenocken auf dem Außenumfang des Muffenrohres verankerbar ist. Endlich kann der Spannbügel an seinem der Spannschale abgewandten Längsbereich zusätzlich in Längsrichtung verlaufende Versteifungsrippen aufweisen.

Im folgenden wird die Erfindung anhand einer lediglich ein Ausführungsbeispiel darstellenden Zeichnung näher erläutert; es zeigen:

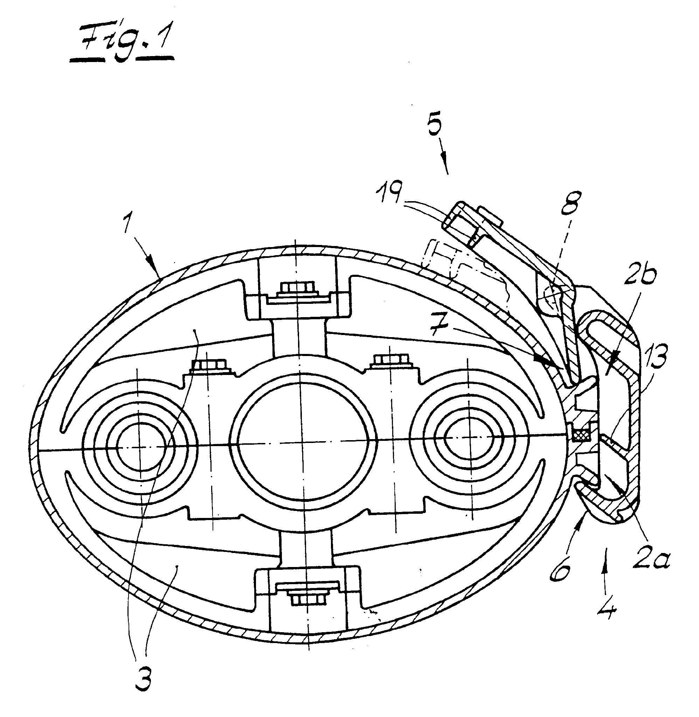

- Fig. 1: eine mittels eines erfindungsgemäßen Spannverschlusses geschlossene Kabelmuffe in schematischer Stirnansicht,

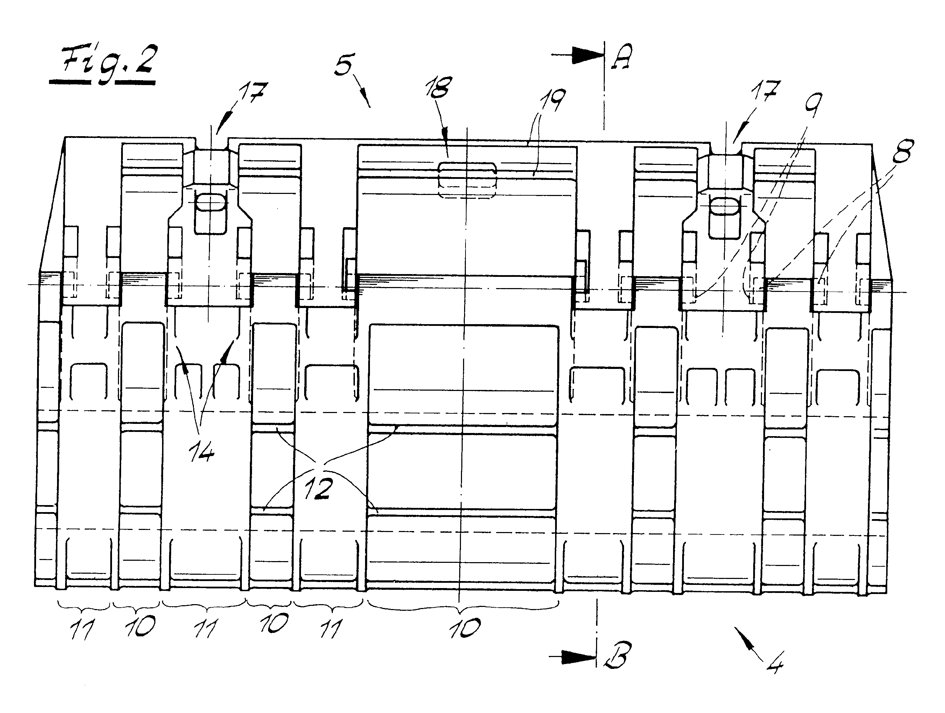

- Fig. 2: den Spannverschluß in Seitenansicht,

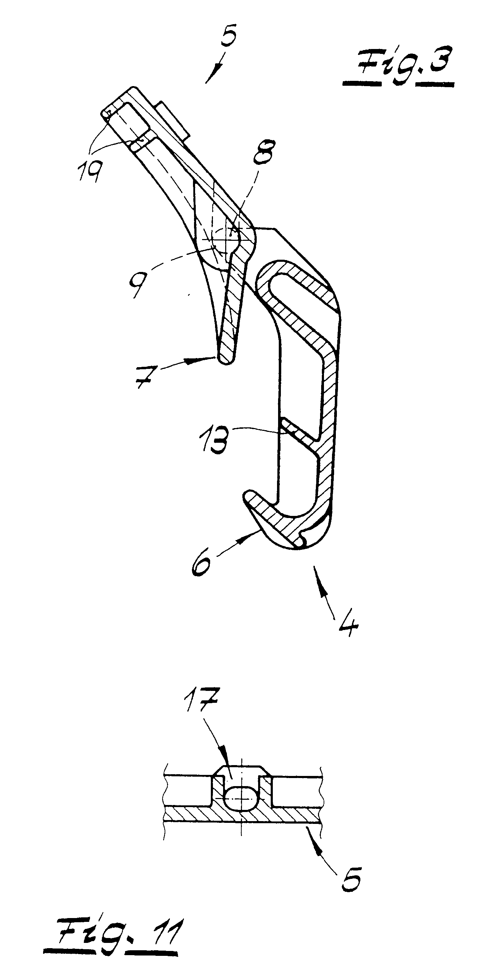

- Fig. 3: einen Schnitt A-B durch den Gegenstand nach Fig. 2,

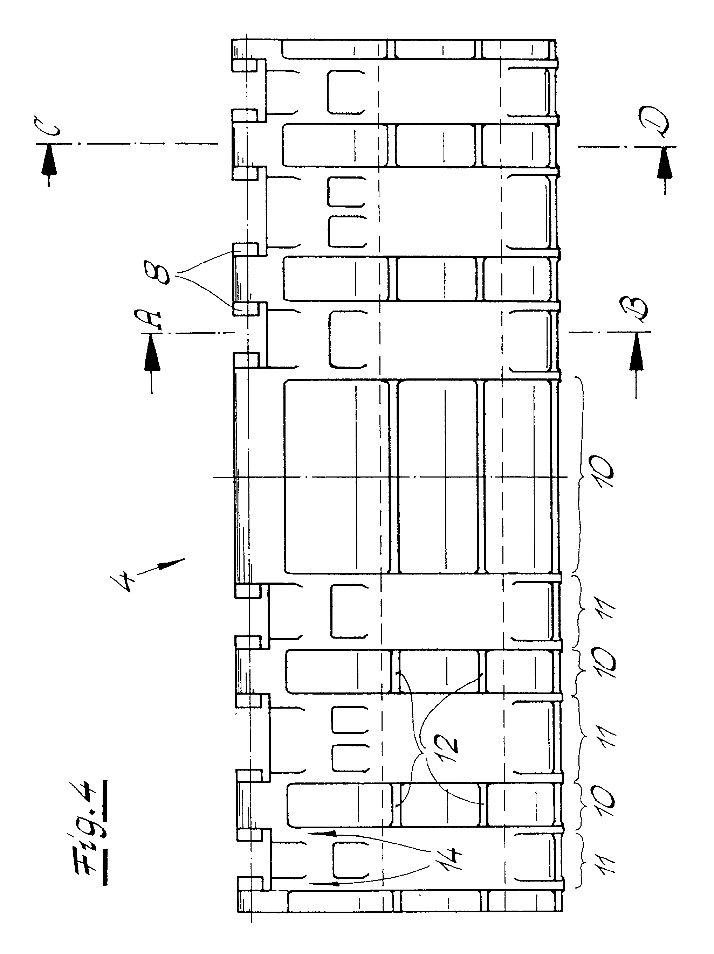

- Fig. 4: die Spannschale für den Gegenstand nach Fig. 2 in Seitenansicht,
- Fig. 5: einen Schnitt A-B durch den Gegenstand nach Fig. 4,

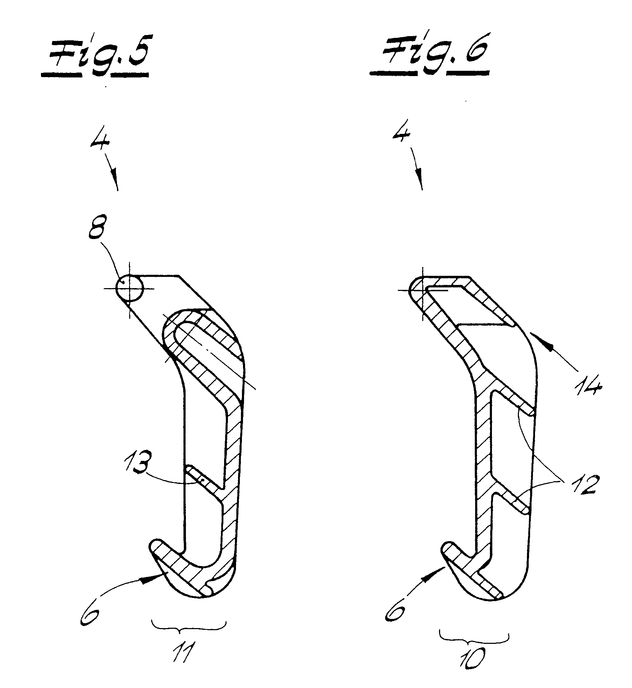

- Fig. 6: einen Schnitt C-D durch den Gegenstand nach Fig. 4,

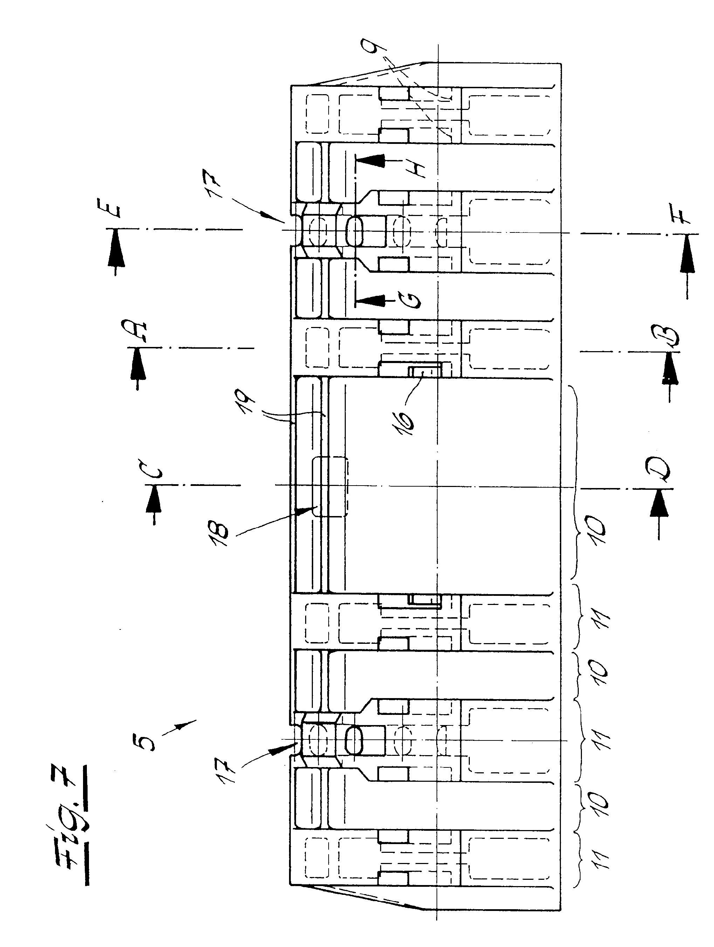

- Fig. 7: den Spannbügel für den Gegenstand nach Fig. 2 in Seitenansicht,

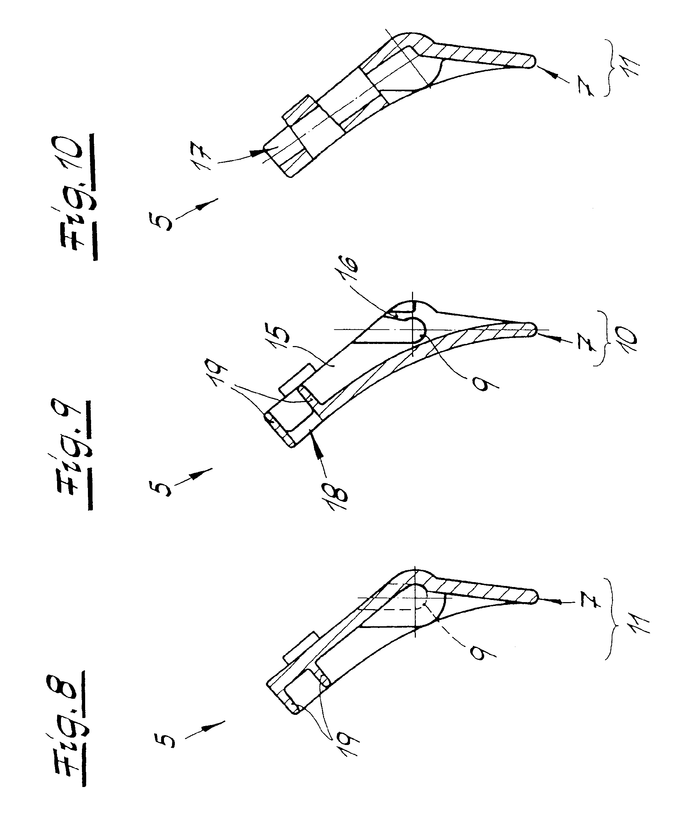

- Fig. 8: einen Schnitt A-B durch den Gegenstand nach Fig. 7,
- Fig. 9: einen Schnitt C-D durch den Gegenstand nach Fig. 7,
- Fig. 10: einen Schnitt E-F durch den Gegenstand nach Fig. 7 und
- Fig. 11: einen Schnitt G-H durch den Gegenstand nach Fig. 7.

In den Figuren ist ein Spannverschluß zum Verschließen einer Kabelmuffe für das Verbinden und Abzweigen von Kabeln, insbesondere Fernmeldekabeln dargestellt. Eine solche Kabelmuffe weist ein längsgeteiltes Muffenrohr 1, die Längsteilung begrenzende Verschlußprofile 2a, 2b mit jeweils einer Hinterschneidung sowie stirnseitig ummantelte Dichtungskörper 3 auf.

Der Spannverschluß besteht in seinem grundsätzlichen Aufbau aus einer Spannschale 4 und einem Spannbügel 5, wobei die Spannschale 4 an ihrer Längsseite eine Klaue 6 zum Hintergreifen des einen Verschlußprofils 2a aufweist und an ihrer anderen Längsseite der Spannbügel 5 schwenkbar gelagert ist und in eingeschwenktem ZU-stand eine Klaue 7 zum Hintergreifen des anderen Verschlußprofils 2b bildet. Bei über einen Totpunkt hinaus eingeschwenktem Spannbügel 5 sind die Längsränder des Muffenrohres zusammengedrückt. - Die Spannschale 4 und der Spannbügel 5 sind als rippenverstärkte Kunststoffteile ausgebildet. Die Spannschale 4 weist an ihrer der Klaue 6 gegenüberliegenden Längsseite Lagerzapfen 8, der Spannbügel 5 im Abstand der Lagerzapfen Lageraugen 9 zur Aufnahme der Lagerzapfen 8 auf. Die Lageraugen 9 und die Lagerzapfen 8 bilden eine Rastsitzverbindung. Die Spannschale 4 besitzt einen mäanderförmigen Längsquerschnitt unter wechselweiser Bildung von Zugabschnitten 10 und Druckabschnitten 11 mit einer gemeinsamen durchlaufenden Klaue 6. Die innenliegenden Zugabschnitte 10 weisen nach außen gerichtete Versteifungsrippen 12 und die außenliegenden Druckabschnitte 11 nach innen gerichtete Versteifungsrippen 13 auf. Die Druckabschnitte 11 sind schmaler als die Zugabschnitte 10 ausgeführt. Die Versteifungsrippen 12, 13 verlaufen in Längsrichtung. Der mittlere Bereich der Spannschale 4 ist als verhältnismäßig breiter Zugabschnitt 10 ausgebildet. Die beiden Randbereiche weisen einen verhältnismäßig häufigen Wechsel von weniger breiten Druck- und Zugabschnitten 10, 11 auf. Die Zugabschnitte 10 besitzen auf ihrer der Klaue 6 gegenüberliegenden Längsseite über die Druckabschnitte 11 vorkragende, die Längsseite definierende Ausformungen 14 mit beidseitig angeformten, gleichsam fliegend angeordneten Lagerzapfen 8. - Der Spannbügel 5 weist quer zur Längsrichtung angeordnete Versteifungsrippen 15 mit obenseitig offenen Lageraugen 9 und die Lageraugen 9 definierenden Rastschultern 16 auf. Der Spannbügel 5 besitzt einen mäanderförmigen Längsquerschnitt unter Bildung von wechselweisen Zugabschnitten 10 und Druckabschnitten 11 - ähnlich wie die Spannschale 4. Die quer zur Längsrichtung angeordneten Versteifungsrippen 15 bilden den Übergang von den innenliegenden Zugabschnitten 10 zu den außenliegenden Druckabschnitten 11. Zwei im Randbereich des Spannbügels 5 liegende achssymmetrische Druckabschnitte 11 bilden Einstecköffnungen 17 für Betätigungswerkzeuge. Der Spannbügel 5 weist zumindest im mittleren Bereich eine Durchbrechung 18 zum Anschluß eines flexiblen Sicherungsmittels auf. Der Spannbügel 5 besitzt ferner an seinem der Spannschale 4 abgewandten Längsbereich in Längsrichtung verlaufende Versteifungsrippen 19.

## Patentansprüche

1. Spannverschluß zum Verschließen einer Kabelmuffe für das Verbinden und Abzweigen von Kabeln, insbesondere Fernmeldekabeln, mit einem längsgeteilten Muffenrohr (1) und die Längsteilung begrenzenden Verschlußprofilen (2a,2b) mit jeweils einer Hinterschneidung, bestehend aus einer Spannschale (4) und einem Spannbügel (5), wobei die Spannschale (4) an ihrer einen Längsseite eine Klaue (6) zum Hintergreifen des einen Verschlußprofils (2a) aufweist und an ihrer anderen Längsseite der Spanbügel (5) schwenkbar gelagert ist und in eingeschwenktem Zustand eine Klaue (7) zum Hintergreifen des anderen Verschlußprofils (2b) bildet, und wobei nach über einen Totpunkt hinaus eingeschwenktem Spannbügel (5) die Längsränder des Muffenrohrs (1) zusammengedrückt sind, **dadurch gekennzeichnet,** daß die Spannschale (4) und der Spannbügel (5) als rippenverstärkte Kunststoffteile ausgebildet sind, daß die Spannschale (4) an ihrer der Klaue (6) gegenüberliegenden Längsseite Lagerzapfen (8) und der Spannbügel (5) im Abstand der Lagerzapfen Lageraugen (9) zur Aufnahme der Lagerzapfen (8) aufweist, und daß die Lageraugen (9) und die Lagerzapfen (8) eine Rastsitzverbindung bilden.

2. Spannverschluß nach Anspruch 1, dadurch gekennzeichnet, daß die Spannschale (4) einen mänanderförmigen Längsquerschnitt unter wechselweiser Bildung von Zugabschnitten (10) und Druckabschnitten (11) mit einer gemeinsamen Klaue (6) aufweist, wobei die innenliegenden Zugabschnitte (10) nach außen gerichtete Versteifungsrippen (12) und die außenliegenden Druckabschnitte (11) nach innen gerichtete Versteifungsrippen (13) aufweisen.

3. Spannverschluß nach Anspruch 1 oder 2, dadurch gekennzeichnet, daß die Druckabschnitte (11) schmaler als die Zugabschnitte (10) ausgebildet sind und die Versteifungsrippen (12, 13) in Längsrichtung verlaufen.

4. Spannverschluß nach einem der Ansprüche 1 bis 3, dadurch gekennzeichnet, daß der mittlere Bereich der Spannschale (4) als verhältnismäßig breiter Zugabschnitt (10) ausgebildet ist und die beiden Randbereiche einen verhältnismäßig häufigen Wechsel von weniger breiten Druck- und Zugabschnitten (10, 11) aufweisen.

5. Spannverschluß nach einem der Ansprüche 1 bis 4, dadurch gekennzeichnet, daß die Zugabschnitte (10) auf ihrer der Klaue (6) gegenüberliegenden Längsseite über die Druckabschnitte (11) vorkragende, die Längsseite definierende Ausformungen (14) mit beidseitig angeformten Lagerzapfen (8) aufweisen.

6. Spannverschluß nach einem der Ansprüche 1 bis 5, dadurch gekennzeichnet, daß der Spannbügel (5) quer zur Längsrichtung angeordnete Versteifungsrippen (15) mit obenseitig offenen Lageraugen (9) und die Lageraugen definierenden Rastschultern (16) aufweist.

7. Spannverschluß nach einem der Ansprüche 1 bis 6, dadurch gekennzeichnet, daß der Spannbügel (5) einen mäanderförmigen Längsquerschnitt unter Bildung von wechselweisen Zugabschnitten (10) und Druckabschnitten (11) aufweist, wobei die quer zur Längsrichtung angeordneten Versteifungsrippen (15) den Übergang von den innenliegenden Zugabschnitten (10) zu den außenliegender Druckabschnitten (11) bilden.

8. Spannverschluß nach einem der Ansprüche 1 bis 7, dadurch gekennzeichnet, daß zwei im Randbereich des Spannbügels (5) liegende achssymmetrische Druckabschnitte (11) Einstecköffnungen (17) für die Betätigungswerkzeuge bilden.

9. Spannverschluß nach einem der Ansprüche 1 bis 8, dadurch gekennzeichnet, daß der Spannbügel (5) zumindest im mittleren Bereich eine Durchbrechung (18) zum Anschluß eines flexiblen Sicherungsmittels aufweist.

10. Spannverschluß nach einem der Ansprüche 1 bis 9, dadurch gekennzeichnet, daß der Spannbügel (5) an seinem der Spannschale (4) abgewandten Längsbereich in Längsrichtung verlaufende Versteifungsrippen (19) aufweist.

## Claims

1. A clamping closure for closing a cable sleeve for connecting and branching cables, particularly communications cables, with a longitudinally divided socket pipe (1) and closure profiles (2a, 2b) delimiting the longitudinal division in each case with a rear cut-out, consisting of a clamping shell (4) and a clamping bail (5) wherein the clamping shell (4) has on one of its longitudinal sides a claw (6) for rearwardly engaging one closure profile (2a) and on its other longitudinal side the clamping bail (5) is pivotally mounted and in the pivoted-in state forms a claw (7) for rearwardly engaging the other closure profile (2b), and wherein with the clamping bail (5) pivoted in beyond a dead-centre the longitudinal edges of the socket pipe (1) are pressed together, characterised in that the clamping shell (4) and the clamping bail (5) are constructed from plastics parts reinforced with ribs, that the clamping shell (4) has journal studs (8) on its longitudinal side opposite the claw (6) and the clamping bail (5) has journal sockets (9) for receiving the journal studs (8) at a distance from the journal studs, and that the journal sockets (9) and the journal studs (8) form a catch-seat connection.

2. A clamping closure according to claim 1, characterised in that the clamping shell (4) has a crenellated longitudinal cross-section alternately forming pull sections (10) and push sections (11) with a common claw (6), wherein the inner pull sections (10) have stiffening ribs (12) directed outwards and the outer push sections (11) have stiffening ribs (13) directed inwards.

3. A clamping closure according to claim 1 or 2, characterised in that the push sections (11) are constructed more narrowly than the pull sections (10) and the stiffening ribs (12, 13) run in the longitudinal direction.

4. A clamping closure according to one of claims 1 to 3, characterised in that the central region of the clamping shell (4) is constructed as a relatively wide pull section (10) and the two edge regions have a relatively frequent alternation of less wide push and pull sections (10, 11).

5. A clamping closure according to one of claims 1 to 4, characterised in that the pull sections (10) have formations (14) on their longitudinal side opposite the claw (6), as front flanges over the push sections (11), defining the longitudinal side with journal studs (8) formed on both sides.

6. A clamping closure according to one of claims 1 to 5, characterised in that the clamping bail (5) has stiffening ribs (15) arranged transversely to the longitudinal direction with journal sockets (9) open on the upper side and catch shoulders (16) defining the journal sockets.

7. A clamping closure according to one of claims 1 to 6, characterised in that the clamping bail (5) has a crenellated longitudinal cross-section forming alternate pull sections (10) and push sections (11), wherein the stiffening ribs (15) arranged transversely to the longitudinal direction form the transition from the inner pull sections (10) to the outer push sections (11).

8. A clamping closure according to one of claims 1 to 7, characterised in that two axially symmetrical push sections (11) lying in the edge region of the clamping bail (5) form insertion openings (17) for the operating tool.

9. A clamping closure according to one of claims 1 to 8, characterised in that the clamping bail (5) has a perforation (18) at least in the central region for attachment of a flexible safety means.

10. A clamping closure according to one of claims 1 to 9, characterised in that the clamping bail (5) has stiffening ribs (19) running in the longitudinal direction on its longitudinal region facing away from the clamping shell (4).

## Revendications

1. Fermeture de serrage destinée à fermer un manchon de câble pour le raccordement et la dérivation de câbles, en particulier de câbles de télécommunication, comportant un tube de manchon (1) partagé dans sa longueur et des profilés de fermeture (2a, 2b) délimitant le partage longitudinal avec chacun un détalonnage, constituée d'une coque de serrage (4) et d'un étrier de serrage (5), dans laquelle la coque de serrage (4) présente, sur l'un de ses grands côtés, une griffe (16) destinée à passer derrière un profilé de fermeture (2a) et sur son autre grand côté, l'étrier de serrage (5) est monté pivotant et forme, à l'état pivoté vers l'intérieur, une griffe (7) destinée à passer derrière l'autre profilé de fermeture (2b), et dans laquelle, après que l'étrier de serrage (5) a été pivoté vers l'intérieur, au-delà d'un point mort, les bords longitudinaux du tube de manchon (1) sont comprimés, caractérisée en ce que la coque de serrage (4) et l'étrier de serrage (5) sont des pièces en matière plastique renforcées par des nervures, en ce que la coque de serrage (4) présente, sur son grand côté opposé à la griffe (6), des tourillons (8) et l'étrier de serrage (5) présente, à distance des tourillons (8), des oeillets d'appui (9) destinés à loger les tourillons (8), et en ce que les oeillets (9) et les tourillons (8) forment un assemblage à encliquetage.

2. Fermeture de serrage selon la revendication 1, caractérisée en ce que la coque de serrage (4) présente longitudinalement une section transversale en méandres, formant alternativement des portions de traction (10) et des portions de pression (11) avec une griffe (6) commune, les portions de traction (10) internes présentant des nervures de pression (11) externes présentant des nervures de renfort (13) dirigées vers l'intérieur.

3. Fermeture de serrage selon les revendications 1 ou 2, caractérisée en ce que les portions de pression (11) sont plus étroites que les portions de traction (10) et les nervures de renfort (12, 13) s'étendent dans la direction longitudinale.

4. Fermeture de serrage selon l'une des revendications 1 à 8, caractérisée en ce que la zone centrale de la coque de serrage (4) est une portion de traction (10) relativement large et les deux zones de bordure présentent une alternance relativement fréquente de portions de pression et de portions de traction (10, 11) moins larges.

5. Fermeture de serrage selon l'une des revendications 1 à 4, caractérisée en ce que les portions de traction (10) présentent, sur leur grand côté faisant face à la grille (6), des déformations (14) dépassant des portions de pression (11), définissant le grand côté, avec des tourillons (8) formés de part et d'autre.

6. Fermeture de serrage selon l'une des revendications 1 à 5, caractérisée en ce que l'étrier de serrage (5) présente des nervures de renfort (15) disposées transversalement à la direction longitudinale avec des oeillets d'appui (9) ouverts en haut et des épaulements d'arrêt (16) définissant les oeillets d'appui.

7. Fermeture de serrage selon l'une des revendications 1 à 6, caractérisée en ce que l'étrier de serrage (5) présente longitudinalement une section transversale en méandres formant alternativement des portions de traction (10) et des portions de pression (11), les nervures de renfort (15) disposées transversalement à la direction longitudinale, formant la transition entre les portions de traction (10) internes et les portions de pression (11) externes.

8. Fermeture de serrage selon l'une des revendications 1 à 7, caractérisée en ce que deux portions de pression (11) à symétrie axiale, situées dans la zone de bordure de l'étrier de serrage (5), formant des ouvertures d'introduction (17) pour les outils d'actionnement.

9. Fermeture de serrage selon l'une des revendications 1 à 8, caractérisée en ce que l'étrier de serrage (5) présente, au moins dans la zone centrale, un ajour (18) pour le raccordement d'un moyen de sûreté flexible.

10. Fermeture de serrage selon l'une des revendications 1 à 9, caractérisée en ce que l'étrier de serrage (5) présente des nervures de renfort (19) s'étendant longitudinalement, dans sa zone de longueur tournée à l'opposé de la coque de serrage (4).
